(19) Europäisches Patentamt
European Patent Office
Office européen des brevets

(11) **EP 2 151 888 B1**

(12) **EUROPÄISCHE PATENTSCHRIFT**

(45) Veröffentlichungstag und Bekanntmachung des Hinweises auf die Patenterteilung:
**25.02.2015  Patentblatt 2015/09**

(51) Int Cl.:
*H01Q 1/32* [(2006.01)]  *H01Q 1/42* [(2006.01)]
*H01Q 15/00* [(2006.01)]  *G01S 13/93* [(2006.01)]

(21) Anmeldenummer: **09009601.7**

(22) Anmeldetag: **24.07.2009**

(54) **Radom für einen Radarsensor in einem Kraftfahrzeug**

Radome for a radar sensor in a motor vehicle

Radôme pour un capteur radar dans un véhicule automobile

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **01.08.2008  DE 102008036011**

(43) Veröffentlichungstag der Anmeldung:
**10.02.2010  Patentblatt 2010/06**

(73) Patentinhaber: **Audi AG**
**85045 Ingolstadt (DE)**

(72) Erfinder:
• **Pfeiffer, Florian**
**85567 Grafing (DE)**
• **Biebl, Erwin, Prof., Dr.**
**82110 Germering (DE)**
• **Siedersberger, Karl-Heinz, Dr.**
**85049 Ingolstadt (DE)**

(74) Vertreter: **Thielmann, Frank**
**AUDI AG**
**Patentabteilung**
**85045 Ingolstadt (DE)**

(56) Entgegenhaltungen:
EP-A- 0 954 052    WO-A-2007/009834
WO-A-2008/090846    JP-A- 6 224 614
JP-A- 2003 142 917

**Beschreibung**

Die Erfindung betrifft ein Radom für einen Radarsensor in einem Kraftfahrzeug, dessen wenigstens eine Wand auf einer ersten Oberfläche mit wenigstens einer dreidimensionalen ersten Struktur versehen ist, wobei eine der ersten Oberfläche gegenüberliegende zweite Oberfläche wenigstens eine an die wenigstens eine erste Struktur derart angepasste zweite Struktur aufweist, dass der optische Weg für elektromagnetische Wellen an strukturaufweisenden wie auch strukturlosen Stellen der Wand im Wesentlichen gleich ist.

Die Verwendung von Fahrerassistenzsystemen wie Abstandshaltesystemen oder Navigationseinrichtungen nimmt immer mehr zu. Die hierfür nötigen Sensoren sind beispielsweise Kameras oder auch Radarsensoren. Im Falle von Radarsensoren ist es auch technischer Sicht heraus optimal, wenn im Arbeitsbereich des Sensors keine Hindernisse außer den Messobjekten selbst vorzufinden sind. Aus Designgründen ist es jedoch erstrebenswert, die Radarsensoren hinter der Fahrzeugverkleidung zu verstecken.

Im Falle des Einbaus eines Radarsensors in der Fahrzeugfront, genauer gesagt hinter dem Kühlerschutzgrill, besteht eine Möglichkeit darin, ein Radom in Form einer Abdeckung in die Streben des Kühlerschutzgrills einzubauen. Hierbei können die horizontalen Strukturen des Kühlerschutzgrills in Form dreidimensionaler Strukturen weitergeführt werden, ohne dass eine Beeinträchtigung in der Winkel-Messgenauigkeit der durch den Radarsensor bestimmten Ablage entsteht. Die Übernahme der vertikalen Strukturen des Kühlerschutzgrills in das Radom verfälscht allerdings die Bestimmung der Ablage in einem derartigen Maße, dass ihre Verwendung unmöglich ist.

Aus der Druckschrift JP 2003142917 A ist ein Radom bekannt, das bei einem senkrechten Einfall von Röntgenstrahlung auf die Oberfläche in einem Teilbereich der Oberfläche reflektierte Röntgenstrahlung um eine Phasen-Verschiebung von 180° verzögert, um Reflexionsverluste am Random zu eliminieren. Hierzu wird ein Teil der Oberfläche um ein Viertel der Wellenlänge gegenüber einem anderen Teil der Oberfläche versetzt. Die versetzten und die nichtversetzten Bereiche des Radoms weisen dabei eine gleiche Dicke auf.

Die Druckschrift JP 06224614 A betrifft ein Radom mit konstanter Dicke. Durch eine Anpassung der Dielektrizitätskonstante des Radommaterials entlang der Radomoberfläche wird erreicht, dass der optische Weg für auf die Oberfläche des Radoms einfallende Radiowellen durch das Radom an verschiedenen Positionen gleich ist.

Der Erfindung liegt damit die Aufgabe zugrunde, ein Radom anzugeben, das beliebig strukturiert werden kann, ohne dass die Winkelbestimmung durch den Radarsensor hierunter leidet.

Zur Lösung der Aufgabe ist bei einem Radom für einen Radarsensor in einem Kraftfahrzeug erfindungsgemäß vorgesehen, dass die wenigstens eine erste Struktur eine längliche Wölbung und die wenigstens eine zweite Struktur eine längliche Eintiefung ist.

Erfindungsgemäß ist also vorgesehen, nicht nur die der Kraftfahrzeugaußenseite zugewandte Oberfläche des Radoms mit einer Struktur zu versehen, sondern auch die der Kraftfahrzeuginnenseite zugewandte Oberfläche. Hierbei ist die zweite Struktur an die erste Struktur derart anzupassen, dass der optische Weg für elektromagnetische Wellen der gleiche ist, egal wo die elektromagnetische Welle durch das Radom hindurchgeht.

Für die Berechnung der zweiten Struktur müssen mehrere Annahmen getroffen werden. Als erstes wird angenommen, dass die vom Zielobjekt zurückreflektierte Welle als ebene Welle auf das Radom auftrifft. Dadurch kann von einer konstanten Phase bei den zurückreflektierten Wellen ausgegangen werden. Zur Berechnung der Rückseite sind noch mehrere Größen zu verwenden: $n_0$ bezeichnet die Brechzahl außerhalb des Radoms und $n_1$ die Brechzahl im Radom selbst. Mit $\vec{r}_{i,j}$ sind für i=1, 2 zwei Strahlen einer elektromagnetischen Welle bezeichnet, wobei j=1 die Ausbreitungsrichtung vor dem Radom, j=2 die Ausbreitungsrichtung im Radom und j=3 die Ausbreitungsrichtung hinter dem Radom kennzeichnet. Diese sind beispielhaft für die gesamte Welle bzw. für beliebige Strahlen dieser Welle. Damit nun die optische Weglänge für alle Wege konstant ist, muss Gleichung 1 gelten:

$$\left( \left| \vec{r}_{i,1} \right| + \left| \vec{r}_{i,3} \right| \right) \cdot n_0 + \left| \vec{r}_{i,2} \right| \cdot n_1 = const.$$

Vorteilhafterweise kann die wenigstens eine zweite Struktur derart ausgestaltet sein, dass die Ausbreitungsrichtung elektromagnetischer Wellen vor und hinter dem Radom im Wesentlichen parallel ist. Hierfür ist notwendig, dass in die Berechnung auch der Zusammenhang zwischen dem Einfallswinkel $\alpha_e$ und dem Ausfallswinkel $\alpha_a$ jeweils am Luft-Radom- sowie am Radom-LuftÜbergang gemäß dem Snelliusschen Brechungsgesetz mit einbezogen wird. Dies beschreibt Gleichung 2:

$$\frac{\sin \alpha_e}{n_a} = \frac{\sin \alpha_a}{n_e}.$$

$n_a$ ist hierbei die Brechzahl des Mediums der ausfallenden und $n_e$ die des Mediums der einfallenden Welle. Abhängig davon, ob es sich um den Übergang Luft-Radom oder umgekehrt handelt, ist für $n_a$ $n_1$ und für $n_e$ $n_2$ und umgekehrt einzusetzen.

Unter Berücksichtigung dieser Beziehung kann erreicht werden, dass die elektromagnetischen Wellen nach Austritt aus dem Radom ebenfalls wieder parallel verlaufen. Bei Berücksichtigung von Gleichung 1 und Gleichung 2 ist die Strukturgebung auf der zweiten Oberfläche eindeutig festgelegt. Die Berechnung erfolgt hierbei für die sogenannte Hauptrichtung. Radarsensoren haben typischerweise einen Öffnungswinkel von $\pm$ 8°, die Hauptrichtung entspricht einem Winkel von 0°.

Erfindungsgemäß ist die wenigstens eine erste Struktur eine längliche Wölbung und die wenigstens eine zweite Struktur eine längliche Eintiefung. Während horizontale längliche Wölbungen die Ablagenbestimmung mittels des Radarsensors nicht verfälschen, gilt dies für andere Wölbungen, insbesondere vertikale, nicht mehr. Auch ergibt sich die Form der zweiten Struktur nicht einfach durch eine Verschiebung der Querschnittsform der ersten Struktur auf die Querschnittsform der zweiten Struktur.

Mit besonderem Vorteil kann die Dicke des Radoms an strukturlosen Stellen im Wesentlichen einem Vielfachen der halben Wellenlänge der elektromagnetischen Wellen im Material des Radoms entsprechen. Beispielsweise kann seine Dicke im Wesentlichen einer Wellenlänge der elektromagnetischen Wellen im Material des Radoms entsprechen. Durch eine derartige Ausgestaltung der Radomwand wird diese für die elektromagnetischen Wellen sozusagen unsichtbar.

In einer weiteren Ausgestaltung kann das Radom zwei untereinander verbundene Wände mit im Wesentlichen spiegelbildlichen ersten und zweiten Strukturen umfassen. Durch die symmetrische Anordnung können eventuell auftretende Abweichungen von der Parallelität der Strahlen kompensiert werden. Auch kann somit die ursprüngliche Dichteverteilung der elektromagnetischen Wellen vor dem Passieren des Radoms wiederhergestellt werden.

Daneben betrifft die Erfindung auch einen Radarsensor mit einem zugeordneten Radom.

Weitere Vorteile, Merkmale und Einzelheiten der Erfindung ergeben sich aus den im Folgenden beschriebenen Ausführungsbeispielen sowie anhand der Zeichnungen. Dabei zeigen:

Fig. 1        Die Teil-Frontansicht eines Kraftfahrzeugs, umfassend ein erfindungsgemäßes Radom,

Fig. 2        den Querschnitt einer ersten und zweiten Struktur eines erfindungsgemäßen Radoms,

Fig. 3 a - c  Ausgestaltungen der ersten und zweiten Struktur in der Querschnittsansicht,

Fig. 4        die Teil-Frontansicht eines Kraftfahrzeugs mit einem erfindungsgemäßen Radom in einer zweiten Ausgestaltung,

Fig. 5        die Kurven verschiedener Winkelmessungen, und

Fig. 6        die ersten und zweiten Strukturen eines zweiwandigen Radoms im Querschnitt.

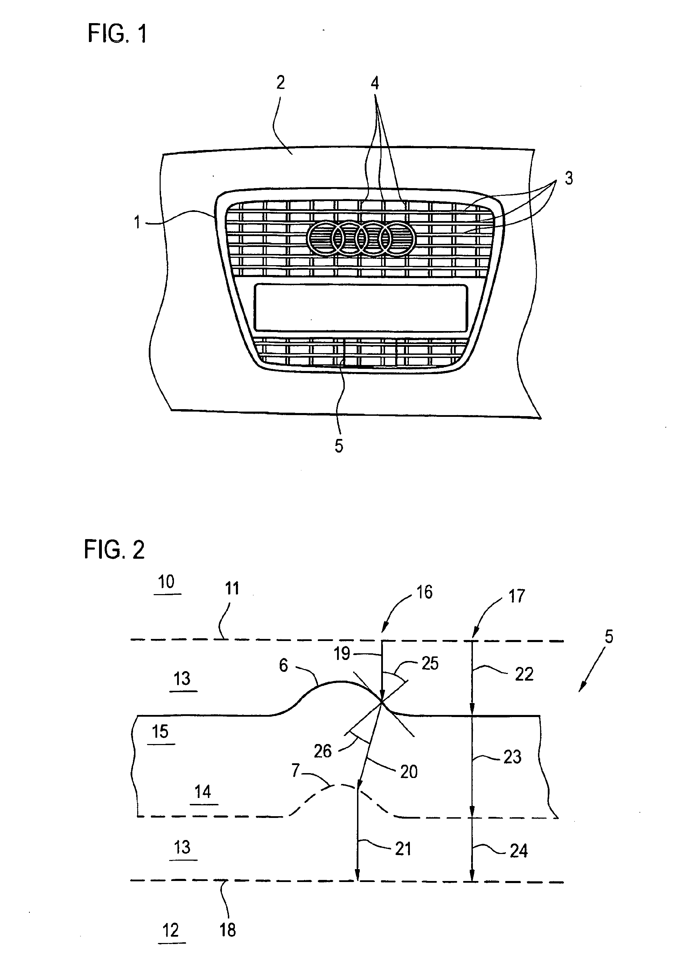

Fig. 1 zeigt den Kühlerschutzgrill 1 eines Kraftfahrzeugs 2. Dieser weist sowohl horizontale Strukturen 3 wie auch vertikale Strukturen 4 auf. In den Kühlerschutzgrill 1 ist ebenfalls das Radom 5 eingebaut. Wenn das Radom 5 die erfindungsgemäße Ausgestaltung der fahrzeuginnenseitigen Fläche aufweist, können, wie in Fig. 1 zu sehen ist, nicht nur die horizontalen Strukturen 3 sondern auch die vertikalen Strukturen 4 auf der kraftfahrzeugseitig außen gelegenen Oberfläche fortgeführt werden.

Fig. 2 zeigt eine schematische Darstellung der Größen zur Berechnung der zweiten Struktur 7. An der Kraftfahrzeugaußenseite 10 befindet sich die Referenzfläche 11, die eine Fläche konstanter Phase darstellt. Dies basiert auf der Annahme, dass die zurückreflektierte Welle als ebene Welle auf das Radom auftrifft. Diese ist senkrecht zur Ausbreitungsrichtung der elektromagnetischen Welle. Auf der Kraftfahrzeuginnenseite 12 wie auch auf der Kraftfahrzeugaußenseite 10 wird als Medium Luft angenommen, weshalb in diesen Bereichen jeweils die gleiche Brechzahl 13, in den Gleichungen als $n_0$ bezeichnet, angesetzt wird. In der Wand 14 des Radoms 5 liegt dagegen die Brechzahl 15 vor, die in den Gleichungen als $n_1$ aufzufinden ist. Für die Strahlen 16 und 17 soll nun die zweite Struktur 7 derart optimiert werden, dass einerseits der optische Weg für beide Strahlen gleich lang ist, andererseits sollen diese Strahlen nach Austritt aus dem Radom an der Referenzfläche 18 wiederum parallel sein. Zur Berechnung der zweiten Struktur gehen die Teilstrahlen 19, 20 und 21 des Strahls 16 als $\vec{r}_{1,1}$ $\vec{r}_{1,2}$ bzw. $\vec{r}_{1,3}$ und für Strahl 17 die Teilstrahlen 22, 23 und 24 als $\vec{r}_{2,1}$, $\vec{r}_{2,2}$ und $\vec{r}_{2,3}$ in die Berechnung ein. Der Einfallswinkel 25 und der Ausfallswinkel 26, die in Gleichung 2 als $\alpha_e$ bzw. $\alpha_a$ aufzufinden sind, sind, wie in Fig. 2 dargestellt ist, gemäß den Konventionen der geometrischen Optik verwendet worden. Aufgrund der Formgebung des Radoms 5 ist damit die optische Weglänge von der Referenzfläche 11 zur Referenzfläche 18 für beliebige parallele Strahlen gleich, diese sind auch nach Verlassen der Wand 14 des Radoms parallel.

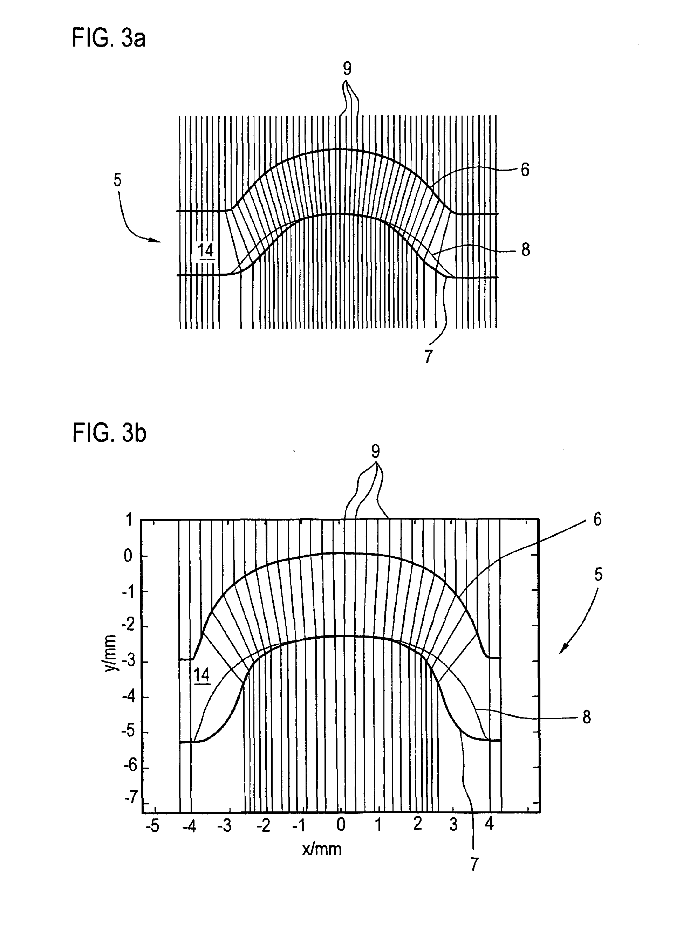

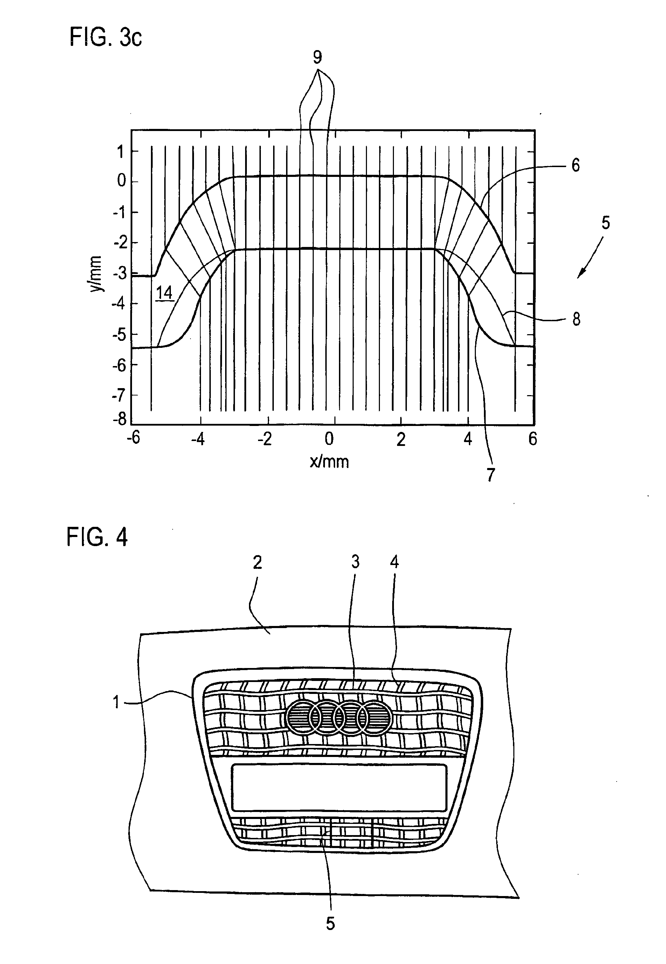

Fig. 3a zeigt einen Ausschnitt eines Querschnitts des Radoms 5, bei dem die erste Struktur 6 und die zweite Struktur 7 abgebildet sind. Wie zu sehen ist, stimmt die Parallele 8 zur ersten Struktur nicht mit der zweiten Struktur 7 überein. Die Parallele 8 zur ersten Struktur stimmt mit der zweiten Struktur 7 genau an den Stellen überein, an denen die elektromagnetischen Wellen 9 mehr oder weniger ohne Richtungsänderung durch das Radom hindurchgelangen. Die Fig. 3b und 3c zeigen unterschiedliche Ausgestaltungen des Querschnitts der ersten Struktur 6 und der zweiten Struktur 7. In Fig. 3b ist die erste wie auch die zweite Struktur 6 bzw. 7 im zentralen Bereich im Vergleich zu Fig. 3a abgeplattet, während in Fig. 3c im zentralen Bereich eine vollständige Abflachung realisiert wurde. Die Formgebung der ersten und dementsprechend berechneten zweiten Strukturen ist dementsprechend variabel und nicht auf die Ausführungsbeispiele beschränkt.

In Fig. 4 ist eine alternative Ausgestaltung des Kühlerschutzgrills 1 bzw. seiner horizontalen Strukturen 3 und seiner vertikalen Strukturen 4 zu sehen. Hierbei verlaufen die horizontalen Strukturen 3 wie auch die vertikalen Strukturen 4 nicht mehr gänzlich horizontal bzw. vertikal, sondern weisen ein schlangen- oder wellenförmiges Muster auf. Eine solche Ausformung der ersten Strukturen 6 auf der Kraftfahrzeugaußenseite 10 ist ohne die erfindungsgemäße Verwendung der zweiten Strukturen 7 auf der Oberfläche der Kraftfahrzeuginnenseite 12 nicht möglich, da ansonsten die Winkelmessung des hinter dem Radom 5 befindlichen Radarsensors erheblich verfälscht würde. Somit können beliebige erste Strukturen 6 auf der kraftfahrzeugau-βenseitigen Fläche des Radoms 5 realisiert werden, ohne dass die Winkelmessgenauigkeit des Radarsensors beeinträchtigt wird.

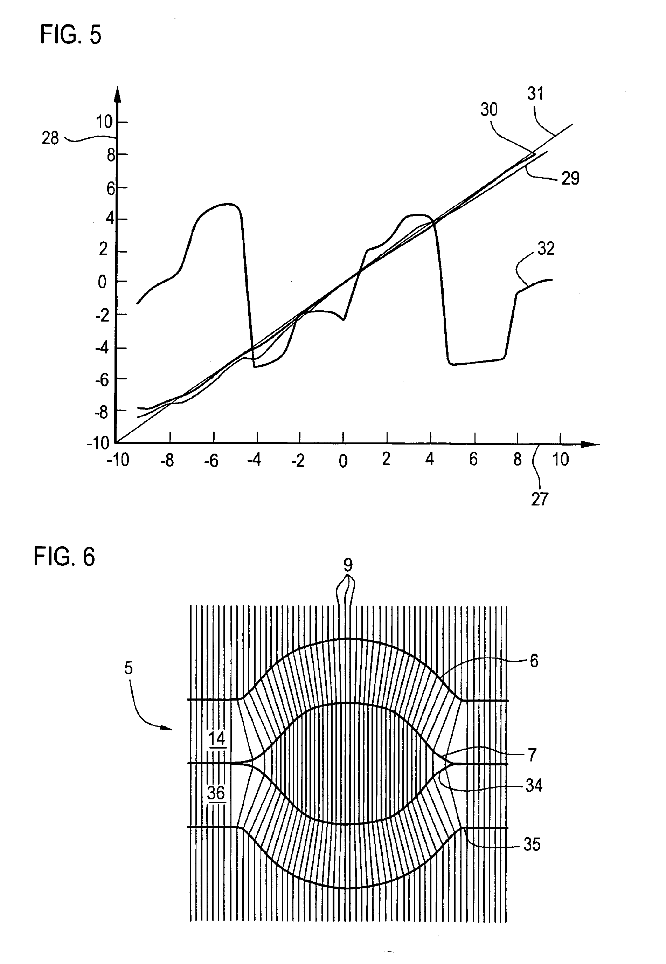

Die Wirkung einer derart optimierten Rückseite ist in Fig. 5 dargestellt. Fig. 5 zeigt eine Winkelmessung, wobei auf der x-Achse 27 der Referenzwinkel und auf der y-Achse 28 der Messwinkel eines Radarsensors eines automobilen Fernbereichradars aufgetragen ist. Während die Messpunkte der ohne Radom aufgenommenen Linie 29 der Referenzmessung und die Punkte der Linie 30 mit einem Radom mit vertikalem Steg und optimierter Rückseite beinahe identisch sind und sehr eng an der Winkelhalbierenden 31 verlaufen, liegen die Messwerte der Kurve 32, die von einem Radom mit einem vertikalen Steg aber einer planen Rückseite stammen, teilweise drastisch vom erwünschten Wert ab. Daraus folgt, dass der Einsatz vertikaler bzw. nichthorizontaler Strukturen erst mit der erfindungsgemäßen Rückseitengestaltung des Radoms ermöglicht wird.

Fig. 6 zeigt ein Radom 5, das zwei Wände 14 und 36 umfasst, wobei die erste Struktur 6 und die zweite Struktur 7 spiegelbildlich als Struktur 34 und Struktur 35 wiedergefunden werden. Mit dieser Anordnung ist es nicht nur möglich, dass die Strahlen 9 nach Passieren des Radoms 5 den gleichen optischen Weg zurückgelegt haben und zueinander parallel sind, sondern zusätzlich wird der linsenartige Effekt, durch den die Strahlen nach Passieren der Wand 14 zur Mitte der Strukturen 6 bzw. 7 hin etwas verdichtet wurden wieder aufgehoben. Somit kann im Optimalfall ah Referenzfläche 18 genau der gleiche Zustand realisiert werden, wie er an Referenzfläche 11 vorlag, womit das Radom 5 für den Radarsensor vollständig unsichtbar ist. Hierdurch kann nicht nur die Fehleranfälligkeit der Winkelbestimmung, sondern auch die Dämpfung, wie auch bei Ausgestaltung mit nur einer Wand, der elektromagnetischen Welle am Radom minimiert werden.

**Patentansprüche**

1. Radom für einen Radarsensor in einem Kraftfahrzeug, dessen wenigstens eine Wand auf einer ersten Oberfläche mit wenigstens einer dreidimensionalen ersten Struktur versehen ist, wobei eine der ersten Oberfläche gegenüberliegende zweite Oberfläche wenigstens eine an die wenigstens eine erste Struktur (6, 35) derart angepasste zweite Struktur (7, 34) aufweist, dass der optische Weg für elektromagnetische Wellen an strukturaufweisenden wie auch strukturlosen Stellen der Wand (14, 36) im Wesentlichen gleich ist,
**dadurch gekennzeichnet,**
**dass** die wenigstens eine erste Struktur (6, 35) eine längliche Wölbung und die wenigstens eine zweite Struktur (7, 34) eine längliche Eintiefung ist.

2. Radom nach Anspruch 1,
**dadurch gekennzeichnet,**

**dass** die wenigstens eine zweite Struktur (7, 34) derart ausgestaltet ist, dass die Ausbreitungsrichtung elektromagnetischer Wellen vor und hinter dem Radom (5) im Wesentlichen parallel ist.

3. Radom nach einem der vorangehenden Ansprüche,
   **dadurch gekennzeichnet,**
   **dass** seine Dicke an strukturlosen Stellen im Wesentlichen gleich einem Vielfachen der halben Wellenlänge der elektromagnetischen Wellen im Material des Radoms (5) entspricht.

4. Radom nach Anspruch 3,
   **dadurch gekennzeichnet,**
   **dass** seine Dicke im Wesentlichen einer Wellenlänge der elektromagnetischen Wellen im Material des Radoms entspricht.

5. Radom nach einem der vorangehenden Ansprüche,
   **dadurch gekennzeichnet,**
   **dass** es zwei untereinander verbundene Wände (14, 36) mit im Wesentlichen spiegelbildlichen ersten und zweiten Strukturen (6, 7, 34, 35) umfasst.

6. Radom nach einem der vorangehenden Ansprüche,
   **dadurch gekennzeichnet,**
   **dass** es in einem Kühlerschutzgrill (1) eines Kraftfahrzeugs (2) integriert ist.

7. Radarsensor mit einem zugeordneten Radom nach einem der vorangehenden Ansprüche.

**Claims**

1. Radome for a radar sensor in a motor vehicle, the at least one wall of which is provided on a first surface with at least one three-dimensional first structure, a second surface which is opposite the first surface comprising at least one second structure (7, 34) which is adapted to the at least one first structure (6, 35) such that the optical path for electromagnetic waves is substantially the same at points of the wall (14, 36) having a structure and at points of the wall having no structure, **characterised in that** the at least one first structure (6, 35) is a longitudinal bulge and the at least one second structure (7, 34) is a longitudinal recess.

2. Radome according to claim 1, **characterised in that** the at least one second structure (7, 34) is designed such that the direction of propagation of electromagnetic waves in front of and behind the radome (5) is substantially parallel.

3. Radome according to any of the preceding claims, **characterised in that** the thickness thereof at points having no structure corresponds substantially equally to a multiple of half of the wavelength of the electromagnetic waves in the material of the radome (5).

4. Radome according to claim 3, **characterised in that** the thickness thereof corresponds substantially to a wavelength of the electromagnetic waves in the material of the radome.

5. Radome according to any of the preceding claims, **characterised in that** it comprises two interconnected walls (14, 36) having substantially mirror-image first and second structures (6, 7, 34, 35).

6. Radome according to any of the preceding claims, **characterised in that** it is integrated in a radiator grille (1) of a motor vehicle (2).

7. Radar sensor comprising an associated radome according to any of the preceding claims.

**Revendications**

1. Radôme pour un capteur radar dans un véhicule automobile, radôme dont au moins une paroi est munie, sur une première surface, d'au moins une première structure tridimensionnelle, une deuxième surface située à l'opposé de la première surface comportant au moins une deuxième structure (7, 34) adaptée de telle sorte à l'au moins une première structure (6, 35) que le trajet optique pour des ondes électromagnétiques est globalement identique à des endroits, présentant une structure ou n'en présentant pas, de la paroi (14, 36),
**caractérisé en ce que** l'au moins une première structure (6, 35) est une partie bombée oblongue et **en ce que** l'au moins une deuxième structure (7, 34) est une partie creusée oblongue.

2. Radôme selon la revendication 1, **caractérisé en ce que** l'au moins une deuxième structure (7, 34) est conçue de telle sorte que le sens de propagation des ondes électromagnétiques est globalement parallèle devant et derrière le radôme (5).

3. Radôme selon l'une des revendications précédentes, **caractérisé en ce que** son épaisseur à des endroits ne présentant pas de structure est sensiblement égale à un multiple de la moitié de la longueur d'onde des ondes électromagnétiques dans le matériau du radôme (5).

4. Radôme selon la revendication 3, **caractérisé en ce que** son épaisseur correspond sensiblement à une longueur d'onde des ondes électromagnétiques dans le matériau du radôme.

5. Radôme selon l'une des revendications précédentes, **caractérisé en ce qu'**il comprend deux parois (14, 36), assemblées l'une à l'autre, avec des premières et deuxièmes structures (6, 7, 34, 35) globalement symétriques.

6. Radôme selon l'une des revendications précédentes, **caractérisé en ce qu'**il est intégré dans une calandre (1) d'un véhicule automobile (2).

7. Capteur radar avec un radôme associé selon l'une des revendications précédentes.

FIG. 1

FIG. 2

FIG. 3a

FIG. 3b

FIG. 3c

FIG. 4

FIG. 5

FIG. 6

**EP 2 151 888 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2003142917 A
- JP 06224614 A